## Europäisches Patentamt

## European Patent Office

## Office européen des brevets

(19)

(11) Veröffentlichungsnummer : **0 111 169 B1**

(12) **EUROPÄISCHE PATENTSCHRIFT**

(45) Veröffentlichungstag der Patentschrift :
19.07.89

(51) Int. Cl.⁴ : **F 16 L 11/08, B 32 B 1/08, B 32 B 15/08**

(21) Anmeldenummer : 83111213.1

(22) Anmeldetag : 10.11.83

(54) **Mehrlagenrohr.**

(30) Priorität : 15.11.82 DE 3242271

(43) Veröffentlichungstag der Anmeldung :
20.06.84 Patentblatt 84/25

(45) Bekanntmachung des Hinweises auf die Patenterteilung : 19.07.89 Patentblatt 89/29

(84) Benannte Vertragsstaaten :
AT BE CH DE FR GB IT LI LU NL SE

(56) Entgegenhaltungen :
DE–A– 1 590 548
DE–A– 2 739 321
GB–A– 1 472 630

(73) Patentinhaber : **Rundel, Adolf**
**Hochbergerstrasse 35**
**D-7968 Saulgau 1 (DE)**

(72) Erfinder : **Rundel, Adolf**
**Hochbergerstrasse 35**
**D-7968 Saulgau 1 (DE)**

(74) Vertreter : **Riebling, Peter, Dr.-Ing.**
**Patentanwälte Dr.-Ing., Dipl.-Ing., Ing.(grad.) Günter Riebling Dr.-Ing., Dipl.-Ing. Peter Riebling Rennerle 10 Postfach 3160**
**D-8990 Lindau (DE)**

## Beschreibung

Die Erfindung betrifft ein Mehrlagenrohr, bestehend aus einem Innenrohr, welches aus einem extrudierfähigen Kunststoffmantel besteht, aus einem das Innenrohr umgebenden Mantel aus Metall und einem den Mantel umgebenden Außenrohr aus Kunststoff, wobei der Mantel mit dem Außenumfang des Innenrohres und formschlüssig mit dem Innenumfang des Außenrohres verbunden ist, und der Mantel mindestens aus einem auf das Innenrohr wendelförmig aufgewickelten Metallband besteht.

Ein derartiges Mehrlagenrohr beschreibt die DE-A-1 590 548. Der Mantel ist dort formschlüssig mit dem Außenumfang des Innenrohres verbunden. Es ist nur eine einzige Lage des wendelförmig aufgewickelten Metallbandes vorgesehen.

Dieses bekannte Mehrlagenrohr schützt ein in das Rohr eingesetztes elektrisches Kabel, welches den Innenraum des Rohres praktisch vollständig ausfüllt. Biegt man daher das Rohr mitsamt dem Kabel, so mag dies einen noch ausreichenden Schutz für das Kabel bieten, weil das Rohr durch das Kabel entsprechend versteift wird. Setzt man aber keinen festen Körper in ein derartiges Mehrlagenrohr ein, so können Probleme entstehen, insbesondere wenn man das Mehrlagenrohr in verhältnismäßig engen Biegeradien biegen muß. Es können sich dann nämlich die übereinander gelegten Wendeln des Metallbandes gegenseitig verschieben, sodaß dazwischen Lücken entstehen und die Schutzwirkung des Rohres nicht mehr zufriedenstellend gegeben ist.

Dieselbe Kritik trifft zu auf ein Mehrlagenrohr, wie es die DE-A-2 739 321 beschreibt. Diese Druckschrift schildert ein kunststoffbeschichtetes Metallrohr für Installationszwecke, welches von innen nach außen aus einem Kernrohr aus Metall besteht, dessen Außenseite kunststoffbeschichtet ist. Es wird von einem Metallband mit Überlappung umwickelt. Das Metallband ist beidseits mit einem Kunststoff beschichtet, der mit der Kunststoffbeschichtung des Kernrohres schmelzverschweißt werden kann. Auch hier bestehen beim Anlegen, insbesondere von verhältnismäßig engen Biegeradien, Probleme mit der Abdichtung des Mehrlagenrohres, insbesondere im Bereich der Überlappungen, und zwar weil dort die Schichten auseinander klaffen können, sodaß in diesem Bereich nicht mehr die notwendige Adbichtung gewährleistet ist.

Ausgehend von einem Mehrlagenrohr mit den eingangs genannten Merkmalen liegt daher der Erfindung die Aufgabe zugrunde, ein solches Mehrlagenrohr so weiterzubilden, daß es auch auf enge Biegungsradien biegbar ist und auch höheren Drücken standhalten kann.

Zur Lösung dieser Aufgabe ist die Erfindung dadurch gekennzeichnet, daß auch das Innenrohr formschlüssig mit dem Mantel verbunden ist, und daß das Metallband mindestens doppellagig auf das Innenrohr aufgewickelt ist, wobei die erste Lage Stoß and Stoß gewickelt ist, die zweite Lage die Stoßstellen der ersten Lage überdeckt, die zweite Lage ebenfalls Stoß an Stoß gewickelt ist und die Stoßstellen der zweiten Lage formschlüssig miteinander verbunden sind.

Durch das spiralförmige Aufwickeln des Metallbandes auf das Innenrohr wird dessen Wandung verstärkt und hochdruckfest ausgebildet ist. Außerdem ergibt sich dadurch eine gas- und wasserdampfdichte Verbindung und Abdichtung des Innenrohres. Die Stoßstellen der ersten Lage sind Stoß an Stoß gelegt und unbehandelt, d. h. sie werden weder verschweißt noch verklebt, und zwar um das Material des Innenrohres nicht zu beeinträchtigen. Die Stoßstellen der zweiten Lage werden verschweißt und/oder verklebt. Hierdurch kommt es zu einer außerordentlichen Druckfestigkeit dieser Metallschale, die dem darin angeordneten Innenrohr eine überragende Druckfestigkeit bei gleichbleibender, guter Biegbarkeit, auch in engen Biegungsradien, verleiht. Wichtig ist auch die Formschlußverbindung zwischen dem Mantel im Bezug zum Innenrohr und im Bezug zum Außenrohr. Diese Formschlußverbindung gewährleistet die Biegbarkeit auf enge Biegungsradien, weil sich das Innenrohr nicht im Bezug zum Mantel oder zum Außenrohr verschieben kann.

Das erfindungsgemäße Mehrlagenrohr ist daher für vielfältige Zwecke einsetzbar. Es ist verwendbar als Mehrlagenrohr mit Alu- oder Weichstahl-Einlage im Fußboden-Heizungsbereich, wodurch die erfindungsgemäße Ausbildung des Mantels eine Sauerstoffdiffusion vom Innenrohr in die Umgebung verhindert wird. Es ist ebenso einsetzbar im Kalt- und Warmasser-Installationsbereich sowie in sämtlichen Förderbereichen, bei denen auch aggressive Flüssigkeiten gefördert werden. Durch die variable Gestaltung des Mantels, der nicht nur aus .einem wendelförmig aufgewickelten Metallband bestehen kann, sondern nach dem Gegenstand des Anspruches 4 zusätzlich noch einen Verstärkungsmantel aufweisen kann, ist es möglich, das erfindungsgemäße Mehrlagenrohr beliebigen Belastungsfällen variabel anzupassen. Es ist daher auch im gesamten Druckbereich für Flüssigkeiten und Gase aller Art verwendbar, wobei, je höher der Druckbereich gewählt wird, der aus dem Metallband bestehende Mantel mehrlagig gewickelt wird, und ein zusätzliches, mehrlagiges Verstärkungsband auf ds Metallband aufgebracht wird.

Weitere Einsatzmöglichkeiten für das erfindungsgemäße Mehrlagenrohr bestehen in sämtlichen Industriebereichen, in der Landwirtschaft und im Kanal-Wasser- und Abwasserbau. Ferner ist ein solches Mehrlagenrohr als Heizwendel in Biogasbehältern, als Gülle- oder Gasleitung, für den Transport von Säuren, Laugen, Kraftstoffen und anderen aggressiven Medien in der Verfahrensindustrie verwendbar.

Bei einer bevorzugten Ausführungsform der Erfindung ist es vorgesehen, daß das Metallband auf eine derartige Temperatur erhitzt wird, die der Erweichungstemperatur des Kunststoffmaterials des Innenrohres entspricht und dann auf das Innenrohr aufgewickelt wird. Das Material des Innenrohres wird hierbei in einem ganz geringen Oberflächenbereich weichplastisch durch das erhitzte Metallband gemacht, das dann in diesem Zustand auf das Innenrohr aufgewickelt wird. Die Kunststoffmoleküle des Innenrohres dringen hierbei in den Verband des Metallbandes hinein und verzahnen sich mit diesem, sodaß es zu der beschriebenen Formschlußverbindung kommt.

Nach dem mindestens doppellagigen Aufwickeln des Metallbandes auf das Innenrohr werden die Stoß an Stoß gelegten Stoßstellen der äussersten Lage des Metallbandes miteinander verklebt und verschweisst, wodurch also eine wendelförmige Klebestelle entlang des Rohres verläuft und das Innenrohr vor Beschädigungen durch den Schweiß- oder Klebevorgang geschützt sind, weil lediglich die äussere Lage dieses Metallbandes derartig formschlüssig miteinander verbunden wird.

Soll das Rohr nicht so hohen Drücken standhalten, dann wird auf den so vorbereiteten Metallmantel das Kunststoff-Außenrohr aufextrudiert, wobei eine Formschlußverbindung wiederum dadurch entsteht, daß das weichplastische Material des extrudierten Kunststoffes sich mit dem Metallband verzahnt.

Soll das Kunststoffrohr höheren Drücken standhalten, dann wird ein zusätzlicher Verstärkungsmantel auf das Metallband aufgebracht. Dieser Verstärkungsmantel besteht aus einer gewendelten, mehrlagigen Schicht aus einem bandförmigen Werkstoff, wie z. B. einem Perlonband, Nylonband, Silikonband, Polytetra-Fluoräthylen-Band, Weichmetallband, Kupferband und dergleichen.

Die Verbindung zwischen dem Verstärkungsmantel und dem Mantel aus Metallband erfolgt wiederum dadurch, daß auf die Oberfläche der Metallschale ein kalt- oderwarmaushärtender Kleber aufgebracht wird und in den noch nicht erhärteten Kleber das Kunststoffband oder das andere bandförmige Werkmaterial aufgewickelt wird.

Das Verstärkungsband kann in verschiedenen Anordnungen aufgebracht werden. Zunächst kann eine einfache Lage Stoß auf Stoß angebracht werden, oder eine einfache Lage, bei der die Stoßstellen überlappt sind. Ferner ist es möglich, mehrere Lagen aufzubringen, die jeweils Stoß an Stoß gewickelt sind, wobei sich die Stoßstellen einander benachbarter Lagen gegenseitig überlappen.

Auf das so hergestellte und vorbereitete Rohr wird dann das Kunststoff-Außenrohr in bekannter Weise aufextrudiert, wobei es wiederum zu einer außerordentlich guten Formschlußverbindung kommt, weil sich der Innenmantel des Kunststoff-Außenrohres wiederum mit der Außenschicht des Verstärkungsbandes verzahnt.

Um die Verzahnung noch zu verbessern, ist es vorgesehen, daß der bandförmige Werkstoff des Verstärkungsmantels aus einem gewebeartig oder gitterartig vernetzten Kunststoffband besteht oder aus perforierten Metallbändern.

Ferner ist wesentlich, daß sämtliche Lagen des Metallbandes und des Verstärkungsbandes Stoß an Stoß gelegt sind und nicht überlappend gelegt sind.

Hierdurch wird der Vorteil erreicht, daß schädliche Lufträume vermieden werden, die ansonsten entstehen, wenn in einer Lage überlappende Stoßstellen gelegt werden.

Das Kunststoffmaterial des Innenrohres kann von dem Kunststoffmaterial des Außenrohres abweichen. Es kommen sämtliche extrudierfähigen Kunststoffmaterialien zur Anwendung, wie z. B. Polyäthylen, Poly-Propylen, Poly-styrol, Polytetra-Fluoräthylen, PVC und dergleichen. Die Wandstärke des Kunststoff-Innenrohres und die Wandstärke des Kunststoff-Außenrohres ist im jeweiligen Belastungsfall anzupassen. Bei der Verwendung eines Aluminiumbandes für den Metallmantel wird eine Stärke von 2/10 bis 4/10 mm vorgezogen ; bei der Verwendung anderer Materialien, wie z. B. Kupfer oder Weichmetallbänder sind auch höhere Materialstärken verwendbar.

Mit der gegebenen technischen Lehre wird also eine 100 % sichere abdichtung des Innenrohres gewährleistet, so daß eine Sauerstoff-Diffusion auf jeden Fall vermieden wird. Hierdurch ist es möglich, ein solches Mehrlagenrohr in vorteilhafter Weise bei Fußbodenheizungen und zur Weiterleitung auch von aggressiven Medien einzusetzen, weil das gewendelte Metallband eine Sicherheitsschale darstellt, die druckdicht und hochbelastbar ist.

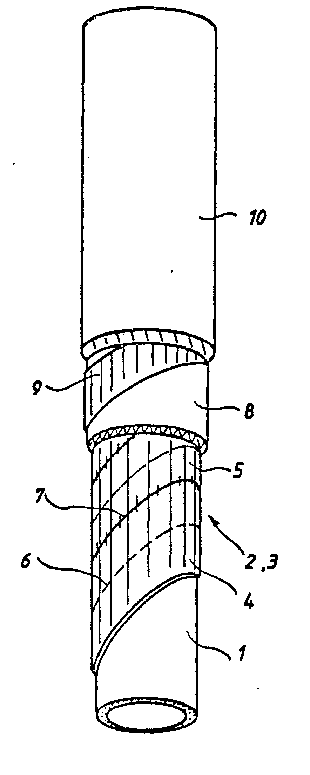

Im folgenden wird die Erfindung anhand einer lediglich einen Ausführungsweg darstellenden Zeichnung näher erläutert. Hierbei gehen aus der Zeichnung und ihrer Beschreibung weitere erfindungswesentliche Vorteile und Merkmale der Erfindung hervor.

In der Abbildung ist ein Mehrlagenrohr nach der Erfindung in teilweise aufgeschnittener Darstellung mit teilweise entferntem Außenmantel, Verstärkungsmantel und Metallband gezeigt.

Das gezeigte Ausführungsbeispiel zeigt ein besonders druckfestes Rohr, weil dieses mit dem Metallmantel 2 versehene Innenrohr noch einen zusätzlichen Verstärkungsmantel 8 aufweist. Dieser Verstärkungsmantel 8 besteht in einer bevorzugten Ausführungsform aus einem gitterförmigen Kunststoffband, was mehrlagig aufgewickelt ist, als Beispiel ist eine solche Lage 9 als oberste Lage dieses Verstärkungsmantels 8 dargestellt. Es ist selbstverständlich möglich, die gezeigte Lage 9 auch gegensinnig zu wickeln, so daß sich die Lagen 9 des Verstärkungsmantels 8 mit den Lagen 4,5 des Metallbandes überkreuzen.

Auf das so vorbereitete Rohr ist das Außenrohr 10, welches aus einem extrudierfähigen Kunststoff besteht, aufextrudiert.

Bei der Verbindung des Mantels 2 mit dem Innenrohr 1 kommt es zu der eingangs beschriebenen Formschlußverbindung, weil das Metallband 3 weder heiß aufgewickelt wird oder mit einem kalt- oder warmaushärtbaren Kleber aufgewickelt wird. Das gleiche kann für die Aufwicklung des Verstärkungsmantels 8 sein, wo auf den Mantel 2 des Metallbandes der warm- oder kaltaushärtbare Kleber aufgebracht wird.

Bei der Extrusion des Außenrohres 10 auf den Verstärkungsmantel 8 kommt es wiederum zu der beschriebenen Formschlußverbindung, weil sich die Innenfläche des Außenrohres 10 formschlüssig mit dem Außenmantel des Verstärkungsmaterials 8 verzahnt.

Bei dem so hergestellten Rohr können in bekannter Weise sämtliche Fittings und andere Verbindungsmittel angebracht werden.

## Patentansprüche

1. Mehrlagenrohr, bestehend aus einem Innenrohr (1), welches aus einem extrudierfähigen Kunststoffmantel besteht, aus einem das Innenrohr (1) umgebenden Mantel (2) aus Metall und einem den Mantel (1) umgebenden Außenrohr (10) aus Kunststoff, wobei der Mantel (2) mit dem Außenumfang des Innenrohres (1) und formschlüssig mit dem Innenumfang des Außenrohres (10) verbunden ist und der Mantel (2) mindestens aus einem auf das Innenrohr (1) wendelförmig aufgewickelten Metallband (3) besteht, dadurch gekennzeichnet, daß auch das Innenrohr (1) formschlüssig mit dem Mantel (2) verbunden ist und daß Metallband (3) mindestens doppellagig auf das Innenrohr (1) aufgewickelt ist, wobei die erste Lge (4) Stoß am Stoß gewickelt ist, die zweite Lage (5) die Stoßstellen (6) der ersten Lage (4) überdeckt, die zweite Lage (5) ebenfalls Stoß an Stoß gewickelt ist, und die Stoßstellen (7) der zweiten Lage (5) formschlüssig miteinander verbunden sind.

2. Mehrlagenrohr nach Anspruch 1, dadurch gekennzeichnet, daß die Formschlußverbindung der Stoßstellen (7) der zweiten Lage (5) des Metallbandes durch Verschweißung und/oder Verklebung gebildet ist.

3. Mehrlagenrohr nach Anspruch 1, dadurch gekennzeichnet, daß die Formschlußverbindung zwischen dem Außenumfang des Innenrohres (1) und dem Mantel (2) dadurch gebildet ist, daß das Metallband (3) auf eine Temperatur erhitzt wird, die der Erweichungstemperatur des Kunststoffmaterials des Innenrohres (1) entspricht und dann auf das Innenrohr (1) aufgewickelt wird.

4. Mehrlagenrohr nach Anspruch 1, dadurch gekennzeichnet, daß der Mantel (2) durch einen zusätzlich auf das Metallband (3) aufgewickelten Verstärkungsmantel (8) gebildet ist und daß der Verstärkungsmantel (8) aus einer gewendelten, mehrlagigen Schicht aus einem bandförmigen Werkstoff, wie Perlonband, Nylonband, Silikonband, Polytetrafluoräthylen-Band, Weichmetallband, Kupferband und dergleichen besteht.

5. Mehrlagenrohr nach Anspruch 4, dadurch gekennzeichnet, daß zwischen dem Außenumfang des Verstärkungsmantels (8) und dem Innenfang des Außenrohres (10) eine Formschlußverbindung, bestehend aus einem kalt- oder warmaushärtbaren Kleber, angeordnet ist.

6. Mehrlagenrohr nach Anspruch 4, dadurch gekennzeichnet, daß zwischen dem Außenumfang des Metallbandes (3) und dem Innenumfang des Verstärkungsmantels (8) eine Formschlußverbindung, bestehend aus einem kalt- oder warmaushärtbaren Kleber, angeordnet ist.

## Claims

1. Multilayer tube comprising an inner tube (1) which comprises an extrudible plastics sleeve, a metal sheath (2) surrounding the inner tube (1) and an outer plastics tube (10) surrounding the sheath (2), the sheath (2) being joined to the outer periphery of the inner tube (1) and form-lockingly to the inner periphery of the outer tube (10) and the sheath (2) comprising at least one metal strip (3) wound helically onto the inner tube (1), characterised in that the inner tube (1) is also form-lockingly joigned to the sheath (2) and the metal strip (3) is wound in at least a double layer on to the inner tube (1), the first layer (4) being wound edge to edge, the second layer (5) covering the joints (6) of the first layer (4), the second layer (5) being similarly wound edge to edge and the joints (7) of the second layer (5) being form-lockingly interconnected.

2. Multilayer tube according to claim 1, characterised in that the form-locking connection of the joints (7) of the second layer (5) of the metal strip is produced by welding and/or bonding.

3. Multilayer tube according to claim 1, characterised in that the form-locking connection between the outer periphery of the inner tube (1) and the sheath (2) is produced by heating the metal strip (3) to a temperature which corresponds to the softening point of the plastics material of the inner tube (1) and then winding it onto the inner tube (1).

4. Multilayer tube according to claim 1, characterised in that the sheath (2) is formed by a reinforcing sheath (8) additionally wound on to the metal strip (3) and that the reinforcing sheath (8) consists of a coiled multilayer layer of a material in strip form such as Perlon tape, Nylon tape, silicone tape, polytetrafluoroethylene tape, soft-metal strip, copper strip and the like.

5. Multilayer tube according to claim 4, characterised in that a form-looking joint comprising an adhesive curable in the cold or hot state is arranged between the outer periphery of the reinforcing sheath (8) and the inner periphery of the outer tube (10).

6. Multilayer tube according to claim 4, characterised in that a form-locking joint consisting of an adhesive curable in the cold or hot state is arranged between the outer periphery of the metal strip (3) and the inner periphery of the reinforcing sheath (8).

## Revendications

1. Tube multicouche constitué par un tube intérieur (1) formé d'une enveloppe en matière plastique extrudable, par une enveloppe métallique (2) entourant le tube intérieur (1), et par un tube extérieur en matière plastique (10) entourant l'enveloppe (2), l'enveloppe (2) étant reliée à la périphérie extérieure du tube intérieur (1) et, par complémentarité de formes, à la périphérie intérieure du tube extérieur (10), l'enveloppe (2) étant constituée d'au moins une bande métallique (3) enroulée en hélice sur le tube intérieur (1), caractérisé en ce que le tube intérieur (1) est également relié par complémentarité de formes à l'enveloppe (2) et en ce que la bande métallique (3) est enroulée de manière à former au moins deux couches sur le tube intérieur (1), la première couche (4) étant enroulée de façon jointive tandis que la seconde couche (5) recouvre les zones d'aboutement (6) de la première couche (4), la seconde couche (5) étant également enroulée de façon jointive tandis que les zones d'aboutement (7) de la seconde couche (5) sont reliées entre elles par complémentarité de formes.

2. Tube multicouche selon la revendication 1, caractérisé en ce que la liaison par complémentarité de formes des zones d'aboutement (7) de la seconde couche (5) de la bande métallique est formée par soudage et/ou collage.

3. Tube multicouche selon la revendication 1, caractérisé en ce que la liaison par complémentarité de formes entre la périphérie extérieure du tube intérieur (1) et l'enveloppe (2) est formée en chauffant la bande métallique (3) à une température qui correspond à la température de ramollissement de la matière plastique du tube intérieur (1) et en l'enroulant ensuite sur le tube intérieur (1).

4. Tube multicouche selon la revendication 1, caractérisé en ce que l'enveloppe (2) est formée par une enveloppe de renforcement supplémentaire (8) enroulée sur la bande métallique (3), et en ce que l'enveloppe de renforcement (8) est formée par une couche multicouche enroulée en hélice, constituée d'un matériau en forme de bande telle qu'une bande de Perlon, une bande de Nylon, une bande de silicone, une bande de polytétrafluoroéthylène, une bande de métal mou, une bande de cuivre et analogue.

5. Tube multicouche selon la revendication 4, caractérisé en ce qu'une liaison par complémentarité de formes assurée par une colle durcissable à froid ou à chaud, est prévue entre la périphérie extérieure de l'enveloppe de renforcement (8) et la périphérie intérieure du tube extérieur (10).

6. Tube multicouche selon la revendication 4, caractérisé en ce qu'une liaison par complémentarité de formes assurée par une colle durcissable à froid ou à chaud, est prévue entre la périphérie extérieure de la bande métallique (3) et la périphérie intérieure de l'enveloppe de renforcement (8).